(19) Europäisches Patentamt
European Patent Office
Office européen des brevets

(11) Veröffentlichungsnummer: **0 042 355**
**B1**

(12) # EUROPÄISCHE PATENTSCHRIFT

(45) Veröffentlichungstag der Patentschrift: **11.04.84**

(51) Int. Cl.³: **C 09 B 67/46**, C 09 B 67/38, D 06 L 3/12, C 09 D 11/02

(21) Anmeldenummer: **81810229.5**

(22) Anmeldetag: **09.06.81**

(54) **Leicht dispergierbare Farbstoffpräparate.**

(30) Priorität: **12.06.80 CH 4537/80**

(43) Veröffentlichungstag der Anmeldung: **23.12.81 Patentblatt 81/51**

(45) Bekanntmachung des Hinweises auf die Patenterteilung: **11.04.84 Patentblatt 84/15**

(84) Benannte Vertragsstaaten: **CH DE FR GB IT LI**

(56) Entgegenhaltungen:
**DE-A- 2 105 231**
**DE-A- 2 443 063**
**DE-A- 2 520 527**
**DE-A- 2 757 330**
**DE-B- 1 064 075**
**FR-A- 2 330 749**
**FR-A- 2 408 681**
**FR-A- 2 410 027**
**GB-A- 2 037 819**

(73) Patentinhaber: **CIBA-GEIGY AG**
**Postfach**
**CH-4002 Basel (CH)**

(72) Erfinder: **Podder, Nitya Gopal, Dr.**
**Sennenmattweg**
**CH-4202 Duggingen (CH)**

**EP 0 042 355 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Leicht dispergierbare Farbstoffpräparate

Die Erfindung betrifft neue, leicht dispergierbare, wässrige Farbstoffpräparate von in Wasser unlöslichen oder schwerlöslichen Farbstoffen, ein Verfahren zur Herstellung dieser Farbstoffpräparate, ihre Verwendung zur Bereitung von Drucktinten, die Drucktinten sowie deren Verwendung zum Bedruckten von Trägermaterialien für den Transferdruck.

Aus der DE-OS 2.520.527 ist bekannt, dass man lagerstabile, flüssige, an Farbstoff kochkonzentrierte Farbstoffpräparate herstellen kann, wenn man ausgewählte anionische Dispergiermittel zusammen mit nichtionogenen Dispergiermitteln und hydrotropen Mitteln, insbesondere Harnstoff, verwendet.

Die Verwendung von hydrotropen Mitteln bringt jedoch in vielen Fällen Nachteile mit sich. Präparate, welche ionische hydrotrope Mittel enthalten, sind wegen ihres zu hohen Elektrolytgehaltes in elektrolytempfindlichen Anwendungsmedien, z. B. in solchen, die Polyacrylatverdicker enthalten, nicht zu verwenden. Präparate mit Harnstoff als hydrotropem Mittel erleiden bei längerer Lagerung infolge Ammoniakabspaltung eine Veränderung des pH-Wertes, was bei alkaliempfindlichen Farbstoffen zu teilweiser Zersetzung führen kann. Ausserdem wird durch Ammoniakabspaltung zusätzlich Elektrolyt gebildet. Bei Anwesenheit von Harnstoff besteht ferner bei vielen Verdickern die Gefahr, dass diese braun werden oder verhärten, so dass sie sich nur schlecht auswaschen lassen. Zudem kann durch die Ammoniakbildung in den hermetisch verschlossenen Aufbewahrungsgefässen der Präparate ein gefährlicher Ueberdruck entstehen.

Aus der DE-OS 28 50 482 sind ferner dispergiermittelarme wässrige Farbstoffpräparate bekannt, welche anionaktive Dispergiermittel und spezifische nichtionogene Dispergiermittel, jedoch keinen Harnstoff oder ähnliche hydrotrope Mittel enthalten.

Alle diese Farbstoffpräparate sind jedoch zur Bereitung von Drucktinten zum Bedrucken von Papier für den Transferdruck, welche weitgehend aus organischen Lösungsmitteln bestehen, nur bedingt geeignet, da bei Verwendung dieser Präparate Flockulate und/oder Agglomerate oder Ausfällungen auftreten. Die Verwendung der mit solchen Drucktinten bedruckten Papiere im Transferdruck führt zu bedrucktem Textilmaterial, welches Sprickel aufweist und somit unbrauchbar ist.

Der vorliegenden Erfindung lag die Aufgabe zugrunde, dispergiermittelarme wässrige Farbstoffpräparate zu entwickeln, die in wässrigen und auch in organischen Drucktinten für den Transferdruck einwandfrei verwendet werden können, ohne dass auf dem bedruckten Textilgut Sprickel bzw. Stippen auftreten.

Diese Aufgabe wird durch die erfindungsgemässen Farbstoffpräparate gelöst. Ueberraschenderweise ist ausserdem die Redispergierbarkeit gegenüber den bekannten Präparaten deutlich verbessert.

Gegenstand der vorliegenden Erfindung sind leicht dispergierbare Farbstoffpräparate, enthaltend Wasser, einen oder mehrere in Wasser unlösliche oder schwerlösliche Farbstoffe, ein anionisches und ein nichtionisches Dispergiermittel sowie gegebenenfalls weitere Zusätze, dadurch gekennzeichnet, dass sie als anionisches Dispergiermittel

a) Dialkylsulfosuccinate, deren Alkylgruppen je 3-7 Kohlenstoffatome aufweisen, oder

b) sulfatierte oder sulfonierte Fettsäuren oder Fettsäureester von Fettsäuren mit 10 bis 22 Kohlenstoffatomen oder

c) Fettamin-oxalkylierungsprodukte der Formel

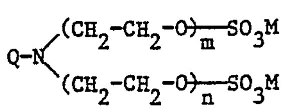

enthalten, worin

Q einen aliphatischen Kohlenwasserstoffrest mit 12-22 C-Atomen,

M Wasserstoff, ein Alkalimetall-, Ammonium- oder Aminsalzkation

und

m und n ganze Zahlen bedeuten, wobei die Summe von m + n mindestens 2 und höchstens 50 beträgt und als weitere Zusätze keine hydrotropen Mittel enthalten.

Als in Wasser unlösliche oder schwerlösliche Farbstoffe kommen vor allem Dispersionsfarbstoffe und Küpenfarbstoffe in Betracht. Es handelt sich um Farbstoffe verschiedener Klassen, bei den Dispersionsfarbstoffen beispielsweise um Nitrofarbstoffe, Aminoketonfarbstoffe, Ketoniminfarbstoffe, Methinfarbstoffe, Nitrodiphenylaminfarbstoffe, Chinolinfarbstoffe, Aminonaphthochinonfarbstoffe, Cumarinfarbstoffe und insbesondere um Anthrachinonfarbstoffe und Azofarbstoffe, wie Monoazo- und Disazofarbstoffe.

Als Küpenfarbstoffe finden beispielsweise indigoide Farbstoffe, anthrachinoide Farbstoffe, wie z. B. Indanthren, sowie Schwefelfarbstoffe und Leukoküpenfarbstoffester Verwendung.

Unter Farbstoffen sollen auch optische Aufheller verstanden werden. Es kommen z. B. in Wasser unlösliche bis schwerlösliche Aufheller der folgenden Verbindungsklassen in Frage : Stilbene, Cumarine, Benzocumarine, Pyrene, Pyrazine, Pyrazoline, Oxazine, Mono- oder Dibenzoxazolyl- oder -imidazolylverbindungen, Aryltriazol- und v-Triazol-Derivate sowie Naphthalsäureimide.

Es versteht sich, dass der Farbstofftyp weitgehend bestimmt wird vom gewünschten Farbton und vom Einsatzgebiet der erfindungsgemässen wässrigen Farbstoffpräparate.

Werden diese z. B. zur Bereitung von Drucktinten und weiteren Verwendung im Transferdruck eingesetzt, so wird man als in Wasser unlösliche oder schwerlösliche Farbstoffe solche verwenden, welche für das Transferdruckverfahren geeignet sind, insbesondere Dispersionsfarbstoffe, welche bei atmosphärischem Druck zwischen 150 bis 220 °C zu mindestens 60 % in weniger als 60 Sekunden in den Dampfzustand übergehen, hitzestabil und unzersetzt transferierbar sind.

Im übrigen ist es auch möglich, Gemische gleicher oder verschiedener Farbstofftypen sowie optischer Aufheller im definitionsgemässen Rahmen in den wässrigen Präparaten einzusetzen. Vorzugsweise enthalten die erfindungsgemässen Präparate 35-50 Gew.-% an Farbstoff bzw. optischem Aufheller.

Als anionaktive Dispergiermittel für die erfindungsgemässen Präparate kommen in Betracht

a) Dialkylsulfosuccinate, deren Alkylgruppen je 3-7 Kohlenstoffatome aufweisen, wie z. B. Di-n-propylsuccinat, Di-isopropylsulfosuccinat, Di-iso-butylsulfosuccinat, Di-heptylsulfosuccinat, vorzugsweise jedoch Di-hexylsulfosuccinat und Di-amylsulfosuccinat ;

b) Sulfatierte oder sulfonierte Fettsäuren oder Fettsäureester von Fettsäuren mit 10 bis 22, vorzugsweise 12-18 Kohlenstoffatomen, wie z. B. sulfatierte Oelsäure, Elaidinsäure oder Ricinolsäure bzw. deren niedere Alkylester, z. B. Ethyl-, Propyl- oder Butylester. Sehr gut geeignet sind auch die sulfatierten oder sulfonierten Oele, welche solche Fettsäuren enthalten, wie z. B. Olivenöl, Ruböl und vor allem Ricinusöl ;

c) Fettamin-oxalkylierungsprodukte der Formel

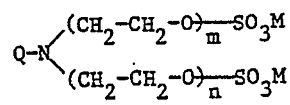

worin

Q einen aliphatischen Kohlenwasserstoffrest mit 12-22, vorzugsweise 14-22 C-Atomen,

M Wasserstoff, ein Alkalimetall-, Ammonium- oder Aminsalzkation

und

m und n ganze Zahlen bedeuten, wobei die Summe von m + n mindestens 2 und höchstens 50, vorzugsweise mindestens 2 und höchstens 30 und insbesondere mindestens 4 und höchstens 12 beträgt.

Für M kommen als Alkalimetallionen besonders das Natrium- oder Kaliumion und als Aminsalzion das Ion eines Mono-, Di- oder Trialkanolamins in Frage. M bedeutet vorzugsweise das Ammoniumion.

Die Fettamin-oxalkylierungsprodukte werden in an sich bekannter Weise hergestellt, indem man 2 bis 50 Mol Ethylenoxid an aliphatische Amine, die einen aliphatischen Kohlenwasserstoffrest von 12 bis 22 Kohlenstoffatomen aufweisen, anlagert und das Anlagerungsprodukt mit Schwefelsäure oder einem funktionellen Derivat davon in den Ester und gegebenenfalls den erhaltenen Ester in die obengenannten Salze überführt. Als funktionelle Derivate der Schwefelsäure seien Halogenide, Ester und Amide genannt, wie z. B. Chlorsulfonsäure und insbesondere Sulfaminsäure.

Der Rest Q muss nicht eine ganz bestimmte Anzahl von Kohlenstoffatomen aufweisen, sondern kann auch eine Mischung von verschieden langen Kohlenwasserstoffketten darstellen, wie dies etwa bei vielen Fettaminen, die sich von natürlichen Fetten ableiten, der Fall ist. Es können auch Mischungen von verschiedenen Fettamin-oxalkylierungsprodukten der oben angegebenen Formel eingesetzt werden.

Besonders bevorzugt ist das Ammoniumsalz des Umsetzungsproduktes von 1 Mol Talgfettamin mit 6 bis 8 Mol Ethylenoxid.

Es ist auch möglich, Mischungen der oben aufgeführten anionischen Dispergiermittel einzusetzen, z. B. Mischungen, enthaltend ein Dialkylsulfosuccinat und/oder eine sulfatierte oder sulfonierte Fettsäure oder deren Ester und/oder ein Fettamin-oxalkylierungsprodukt. Man kann auch Mischungen verwenden, welche eines oder mehrere der genannten anionischen Dispergiermittel a), b) und/oder c) enthalten, sowie weitere anionische Dispergiermittel, wie z. B. Kondensationsprodukte aus Rohkresol, Formaldehyd und Naphthalinsulfonsäure, Polyphosphate oder vorzugsweise Ligninsulfonate. Dabei werden Ligninsulfonate in Kombination mit den unter a), b) und c) genannten anionischen Dispergiermitteln zur Herstellung von wässrigen Druckpasten verwandt, die sich besonders für den Hellton-Druck auf Polyester mit anschlissender HT-Fixierung bzw. Thermosolierung eignen.

Diese anionischen Dispergiermittel werden vorzugsweise in Form der Ammonium-, Amin- oder vor allem Alkalisalze, wie Lithium-, Kalium- oder insbesondere Natriumsalze eingesetzt, und zwar in Mengen von 0,5 bis 5 Gew.-%, vorzugsweise 1-3 Gew.-%, bezogen auf das Gesamtgewicht des Präparates.

Als nichtionogene Dispergiermittel kommen beispielsweise in Frage :

Anlagerungsprodukte von z. B. 5 bis 50 Mol Alkylenoxiden, insbesondere von Ethylenoxid, wobei einzelne Ethylenoxideinheiten durch substituierte Epoxide, wie Styroloxid und/oder Propylenoxid, ersetzt sein können, an höhere Fettsäuren oder an gesättigte oder ungesättigte Alkohole, Mercaptane oder Amine mit 8 bis 20 Kohlenstoffatomen oder an Alkylphenole oder Alkylthiophenole, deren Alkylreste

mindestens 7 Kohlenstoffatome aufweisen ;

Umsetzungsprodukte aus höhermolekularen Fettsäuren und Hydroxyalkylaminen. Diese lassen sich beispielsweise aus höhermolekularen Fettsäuren, vorzugsweise solchen mit etwa 8 bis 20 Kohlenstoffatomen, z. B. Caprylsäure, Stearinsäure, Oelsäure und insbesondere dem unter dem Sammelbegriff « Kokosölfettsäure » zusammengefassten Säuregemisch, und Hydroxyalkylaminen, wie Triethanolamin oder vorzugsweise Diethanolamin, sowie Mischungen dieser Amine, herstellen, wobei die Umsetzung so erfolgt, dass das molekulare Mengenverhältnis zwischen Hydroxyalkylamin und Fettsäure grösser als 1, z. B. 2 : 1, ist. Derartige Verbindungen sind in der USA-Patentschrift Nr. 2.089-212 beschrieben ;

Phenolether, wie p-Nonylphenol, verethert mit 9 Mol Ethylenoxid ; Ricinolsäureester mit 15 Mol Ethylenoxid und Hydroabietylalkohol verethert mit 25 Mol Ethylenoxid.

Besonders vorteilhaft haben sich Fettalkoholpolyglykolether, besonders solche mit 20-100 Mol Ethylenoxid erwiessen, wie Stearyl-Oleylalkohol, verethert mit 80 Mol Ethylenoxid, und Oleylalkohol, verethert mit 20 bis 80 Mol Ethylenoxid, insbesondere jedoch Cetyl-Stearylalkohol, veräthert mit 20-30 Mol Ethylenoxid.

Ebenfalls bevorzugt sind Alkylenoxid-, insbesondere Ethylenoxid-Kondensationsprodukte, wobei einzelne Ethylenoxideinheiten durch substituierte Epoxide, wie Styroloxid und/oder vorzugsweise Propylenoxid, ersetzt sein können.

Besonders bevorzugt sind die Copolymerisate von Ethylenoxid und Propylenoxid der Formel

$$HO(CH_2-CH_2-O)_a-(\underset{\displaystyle CH_3}{\underset{|}{CH}}-CH_2-O)_b-(CH_2-CH_2-O)_c\,H$$

worin die Summe von a und c eine Zahl zwischen 200 und 400 und b eine Zahl zwischen 30 und 80 bedeutet.

Diese nichtionogenen Dispergiermittel sollen vorteilhaft elektrolytarm sein. Gemische derartiger Mittel sind möglich.

Die nichtionogenen Dispergiermittel werden in Mengen von 0,5-4 Gew.-%, vorzugsweise 1-3 Gew.-%, bezogen auf das Gesamtgewicht des Präparates, eingesetzt.

Im allgemeinen ist es vorteilhaft, dass die Gesamtmenge an anionischen und nichtionogenen Dispergiermittel bei 1-6 Gew.-%, vorzugsweise 2-4 Gew.-% liegt, wobei die benötigte Menge in geringem Masse schwankt, je nach der Beschaffenheit des Rohfarbstoffes.

Falls gewünscht können den Farbstoffpräparaten weitere eigenschaftsverbessernde Zusätze beigegeben werden, wie z. B. Feuchthaltemittel und Antifrostmittel, z. B. die Polyole, Ethylenglykol, Monopropylenglykol, Diäthylenglykol, Dipropylenglykol, Tri- oder Polyethylenglykol, Glycerin, Sorbit und andere oder Formamid, wobei das Feuchthalte- und Antifrostmittel als solches oder in Kombination mit einem zweiten Feuchthalte- und/oder Antifrostmittel verwendet werden kann ; desweiteren Antimicrobica ; Fungicide, z. B. wässrige Formalinlösung oder Chloracetamid ; Antischaummittel und viskositätsverbessernde Mittel, z. B. Polysaccharide.

Als besonders lagerstabil haben sich die Präparate erwiesen, welche mindestens 20 Gew.-% Wasser, 25 bis 60, insbesondere 35-50 Gew.-% eines fein verteilten Dispersionsfarbstoffes, 1-3 Gew.-% eines definitionsgemässen anionischen Dispergiermittels, 1-3 Gew.-% eines nichtionogenen Dispergiermittels sowie gegebenenfalls weitere Zusätze enthalten.

Die Herstellung der neuen wässrigen Farbstoffpräparate erfolgt beispielsweise dadurch, dass man den definitionsgemässen Farbstoff in Wasser mit mindestens einem definitionsgemässen anionaktiven Dispergiermittel und/oder nichtionogenen Dispergiermittel vermischt und vermahlt, was z. B. in einer Kugelmühle oder Sandmühle erfolgt, und die restlichen Komponenten vor, während oder auch erst nach dem Mahlprozess zugibt, sodass ein Präparat entsheit, dessen Teilchengrösse kleiner als 10 µm, insbesondere kleiner als 2 µm ist.

Da die erfindungsgemässen Präparate elektrolytarm sind, können auch elektrolytempfindliche Verdicker zur Herstellung von Druckpasten verwendet werden. Als besonders wertvoll haben sich in diesem Zusammenhang vor allem Verdicker auf Polyacrylbasis bewährt.

Die neuen Farbstoffpräparate sind dünnflüssige Dispersionen, die dispergiermittelarm, elektrolytarm, feindispers, dispersionsstabil, d. h. nicht aggregierend und hochkonzentriert an Farbstoff sind. Sie bleiben sowohl bei längerer Lagerung bei 25 bis 30 °C als auch nach mehrwöchiger Lagerung bei 60 °C stabil, d. h. niedrigviskos und einwanfrei filtrierbar und verändern ihre Viskosität nur unwesentlich. Bei der Lagerung bleibt die Feinverteilung der Farbstoffe praktische unverändert. Die neuen Präparate sind stippenfrei verteilbar in Textildruckfarben mit allen konventionellen Verdickungen. Sie sind hervorragend geeignet für den Direktdruck auf synthetischem Textilmaterial, z. B. solchem aus Polyestern.

Werden die erfindungsgemässen Präparate nur in wässrigen Drucktinten oder Druckpasten verwendet, so kann deren Viskosität durch Zusatz von 0,1-1 % Carboxymethylcellulose (Na-Salz) auf einen gewünschten Wert erhöht werden.

Ein ganz wesentlicher Vorteil der neuen Präparate liegt darin, dass man sie zur Bereitung von Drucktinten auf organischer Basis verwenden kann. Drucktinten auf organischer Basis sind z. B. solche,

die aus ca. 80 % eines Gemisches von n-Propanol und iso-Propanol, ca. 10 % Wasser und ca. 10 % CAP (Celluloseacetopropionat) bestehen. Die erfindungsgemässen Präparate sind in diesen Drucktinten einwandfrei ohne Ausfällungen dispergierbar, und mit diesen Drucktinten bedrucktes Transferdruckpapier liefert einwandfreie, sprickelfreie Drucke.

Daneben finden die neuen wässrigen Farbstoffpräparate Verwendung zur Herstellung von wässrigen oder wässrig-organischen Färbeflotten oder Drucktinten oder solchen auf Basis einer Wasser-in-Oel Emulsion.

Die Drucktinten, sind geeignet zum Färben oder Bedrucken von organischem Material, insbesondere synthetischen Textilmaterialien nach kontinuierlicher oder diskontinuierlicher Verfahrensweise, wie z. B. solchen aus Cellulosetriacetat, synthetischen Polyamiden und insbesonders Polyester. Die Färbungen können durch Färbe-, Klotz- oder Druckverfahren erhalten werden. Dabei werden die üblicherweise beim Aufbringen von Dispersionsfarbstoffen auf synthetisches Material eingesetzten Zusätze verwendet. Die Materialien können in den verschiedensten Verarbeitungsstadien vorliegen.

Beim kontinuierlichen Färben von Mischgeweben aus Polyester und Cellulosematerial werden üblicherweise Dispersionsfarbstoffe für den Polyester-Anteil und u. a. Reaktivfarbstoffe für den Cellulose-Anteil nach Einbad-Einstufen-Verfahren eingesetzt. Dabei treten bekannterweise unerwünschte Reaktionen zwischen anionischen Dispergatoren im Dispersionsfarbstoff und dem Reaktivfarbstoff auf und führen zu erheblichen Ausbeuteminderungen der Reaktivfärbungen und damit zu Problemen hinsichtlich der Reproduzierbarkeit der Färbungen sowie zu verstärkten Belastungen der Abwässer.

Werden dagegen Dispersionsfarbstoff-Formulierungen gemäss der vorliegenden Erfindung eingesetzt, so sind die beschriebene Mängel vollständig bzw. weitgehend beseitigt.

Die erfindungsgemässen Farbstoffpräparate können insbesondere zum Bedrucken von flächenförmigen Gebilden nach dem Transferdruckprinzip verwendet werden.

Das Transferdruckverfahren ist allgemein bekannt und beispielsweise detailliert in den französischen Patentschriften 1.223.330, 1.334.829 und 1.585.119 beschrieben. Dabei werden sogenannte Hilfsträger, die mit geeigneten Drucktinten bedruckt sind, in einen engen Kontakt mit dem zu bedruckenden Substrat gebracht, worauf unter Wämre- und gegebenenfalls Druckeinwirkung der für den Transferdruck geeignete Farbstoff von dem Träger auf das Substrat transferiert wird.

Als Hilfsträger kommen hitzestabile und räumlich stabile flächenförmige Gebilde, mit vorteilhaft glatter Oberfläche aus Papier, Cellophan, Metallfolien usw. in Betracht (vgl. britische Patentschrift 1.190.889). Bevorzugt ist Papier.

Der Transfer wird in üblicher Weise durch Wärmeeinwirkung ausgeführt. Hierzu werden die behandelten Trägermaterialien mit den zu bedruckenden Textilmaterialien in Kontakt gebracht und so lange auf etwa 120 bis 210 °C gehalten, bis die auf dem Trägermaterial aufgebrachten definitionsgemässen Farbstoffe auf das Textilmaterial übertragen sind. Dazu genügen in der Regel 5 bis 60 Sekunden.

Nach beendeter Wärmebehandlung wird das bedruckte Material vom Träger getrennt. Dieses bedarf keiner Nachbehandlung, weder einer Dampfbehandlung, um den Farbstoff zu fixieren, noch eines Waschens, um die Echtheiten zu verbessern.

Geeignete Transferdrucksubstrate sind vorzugsweise flächenförmige Gebilde wie Vliese, Filze, Teppiche und vor allem Gewebe und Gewirke aus synthetischen Fasern.

Enthalten die neuen Präparate optische Aufheller, so finden sie Verwendung zum optischen Aufhellen von Textilmaterialien nach z. B. dem Ausziehverfahren, Hochtemperaturausziehverfahren und Foulardtherm-Verfahren. Gegebenenfalls können zur Stabilisierung der Flotte und/oder zur Erzielung von Carrier-Effekten weitere geeignete Dispergatoren oder andere Hilfsmittel zugesetzt werden.

Die folgenden Beispiele erläutern die Erfindung. Teile bedeuten Gewichtsteile und Prozente Gewichtsprozente. Die Temperaturen sind in Grad Gelsius angegeben.

Die DE-OS 24 43 063 betrifft wässrige Präparate von in Wasser unlöslichen bis schwerlöslichen Farbstoffen. Diese enthalten neben Wasser und Farbstoff eine Kombination aus anionaktivem und nichtionischem Dispergiermittel und als weiteren Zusatz ein hydrotropes Mittel. Im Unterschied dazu sind die Präparate gemäss der Erfindung, die neben Wasser und Farbstoff ebenfalls ein anionisches und ein nichtionisches Dispergiermittel enthalten, frei von hydrotropen Mitteln. Zudem gelangen als anionische Dispergiermittel nur ganz spezifische Dispergatoren zur Anwendung ; diese sind in den Gruppen a), b) und c) gemäss der Erfindung zusammengefasst und eindeutig spezifiziert.

Beispiel 1

A. Herstellung des Präparates

480 Teile des Dispersionsfarbstoffes der Formel

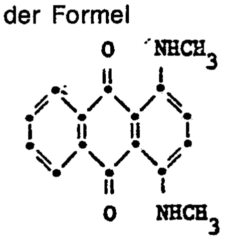

in Form des von Elektrolyten weitgehend gereinigten, getrockneten Rohfarbstoffes werden in einem Dispergiermedium, bestehend aus

303 Teilen Wasser,
170 Teilen 1,2-Propylenglykol,
10 Teilen Formalin,
2 Teilen Antischaummittel (1 : 10 Verdünnung mit Wasser),
10 Teilen Natrium-diamylsulfosuccinat
sowie
25 Teilen eines nichtionogenen Polykondensationsproduktes, bestehend aus 20 % Propylenoxid und 80 % Polyethylenoxid mit einem Molekulargewicht von ca. 16,500, angerührt.

Die Dispersion wird in einer Rührwerksmühle mittels Zirkonoxid-Mahlkörpern solange vermahlen, bis die Primärteilchengrösse des Farbstoffes durchschnittlich 2 µm beträgt. Das Mahlgut wird von den Mahlkörpern abgetrennt und entlüftet. Man erhält ein Farbstoffpräparat, welches dünnflüssig ist, sich filtrieren lässt und seine physikalische Stabilität, insbesondere seinen Dispersionsgrad, auch nach mehrwöchiger Lagerung bei 60 °C oder mehrmonatiger Aufbewahrung bei wechselnden Raumtemperaturen nur unwesentlich verändert.

Das gleiche Ergebnis wird erzielt, wenn die Dispersion in einer Perl-, Sand- oder Dynomühle gemahlen wird.

B. Bereitung der Drucktinte

I. Organische Drucktinte

21 Teile des erhaltenen Präparates werden mit
79 Teilen CAP-Stammverdickung, bestehend aus einem Gemisch von n-Propanol, Isopropanol, Wasser und Celluloseacetopropionat (CAP) im Verhältnis von 41 : 41 : 10 : 8, im Rührwerk bis zur homogenen Vermischung verrührt. Diese Drucktinte wird mit einer Tiefdruckvorrichtung auf Papier gebracht.

II. Wässrige Drucktinte

6 Teile des erhaltenen Farbstoffpräparates werden mit
94 Teilen Stammverdickung, bestehend aus einer 8 %igen wässrigen Stärkeätherlösung, Wasser, einer 12,5 % wässrigen Lösung eines Emulgators für Oel-in-Wasser-Emulsionen (Fettalkoholethylenoxidaddukt), Lackbenzin und einem Fungizid im Verhältnis von 50 : 43,5 : 1 : 5 : 0,5, verrührt.

Die Drucktinte wird im Flachfilmdruck auf Papier aufgetragen.

Die unter Verwendung der oben beschriebenen organischen oder wässrigen Drucktinte bedruckten Papiere sind geeignet zum Bedrucken von Textilmaterialien, z. B. solchen aus Polyester, nach dem Transferdruckverfahren. Es resultieren scharfstehende, egale sprickelfreie Drucke von hoher Farbtiefe.

Beispiel 2

500 Teile des Dispersionsfarbstoffes der Formel

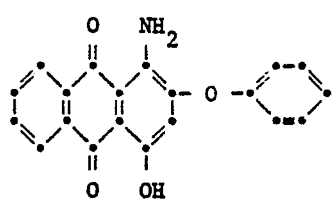

in Form des von Elektrolyten weitgehend gereinigten, getrockneten Rohfarbstoffes werden in einem Dispergiermedium, bestehend aus

303 Teilen Wasser,
150 Teilen 1,2-Propylenglykol,
10 Teilen Formalin,
2 Teilen Antischaummittel (1 : 10 Verdünnung mit Wasser),
10 Teilen Na-diamylsulfosuccinat
sowie
25 Teilen des im Beispiel 1 genannten Polykondensationsproduktes angerührt.

Die Dispersion wird wie im Beispiel 1 beschrieben gemahlen und man erhält ein Farbstoffpräparat, welches die im Beispiel genannten Eigenschaften aufweist.

Beispiel 3

500 Teile des Dispersionsfarbstoffes der Formel

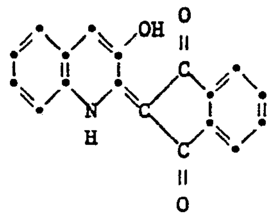

in Form des von Elektrolyten weitgehend gereinigten, getrockneten Rohfarbstoffes werden in einem Dispergiermedium, bestehend aus

273 Teilen Wasser,
170 Teilen 1,2-Propylenglykol,
10 Teilen Formalin,
2 Teilen Antischaummittel (1 : 10 Verdünnung mit Wasser),
10 Teilen Na-diamylsulfosuccinat
sowie
35 Teilen des im Beispiel 1 genannten nichtionogenen Polykondensationsproduktes angerührt.

Die Dispersion wird wie im Beispiel 1 beschrieben gemahlen und man erhält ein Farbstoffpräparat, welches die im Beispiel genannten Eigenschaften aufweist.

Beispiel 4

500 Teile des Dispersionsfarbstoffes der Formel

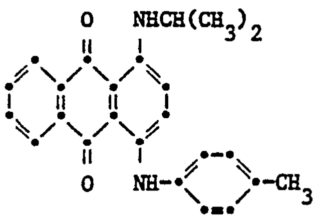

in Form des Presskuchens (Feuchtigkeitsgehalt 40 %) werden in einem Dispergiermedium, bestehend aus

234 Teilen Wasser,
50 Teilen 1,2-Propylenglykol,
10 Teilen Formalin,
2 Teilen Antischaummittel (1 : 10 Verdünnung mit Wasser),
10 Teilen Na-diamylsulfosuccinat
sowie
30 Teilen des im Beispiel 1 genannten nichtionogenen Polykondensationsproduktes angerührt.

Anschliessend wird eine Lösung von

12 Teilen eines Harzes, bestehend aus einem Kondensationsprodukt aus Formaldehyd und Cyclohexanon mit einem Molekulargewicht mit von ca. 2 000, in
150 Teilen 1,2-Propylenglykol während 30 Minuten zugegeben.

Die Dispersion wird in einer Rührwerksmühle mittels Zirkonoxid-Mahlkörpern so lange vermahlen, bis die Primärteilchengrösse des Farbstoffes durchschnittlich 2 µm beträgt. Das Mahlgut wird von den Mahlkörpern abgetrennt und entlüftet. Die Dispersion weist eine Viskosität von 110 mP.s (Brookfield-Viscosimeter, Spindel 4, 50 U/Min.) auf. Durch Zusatz von 0,2 % eines Polysaccharids und mehrstündiges Rühren wird die Viskosität auf einen Wert von 520 mP.s erhöht. Man erhält ein Farbstoffpräparat, welches dünnflüssig ist, sich gut filtrieren lässt und seine Viskosität und seinen Dispersionsgrad auch nach mehrwöchiger Lagerung bei 60 °C oder mehrmonatiger Aufbewahrung bei wechselnden Raumtemperaturen nur unwesentlich verändert.

Das gleiche Ergebnis wird erzielt, wenn die Dispersion in einer Perl-, Sand- oder Dynomühle gemahlen wird.

Wie im Beispiel 1 beschrieben wird mit diesem Präparat eine organische oder wässrige Drucktinte hergestellt, mit der Papier bedruckt wird, welches im Transferdruck Verwendung findet. Man erhält egale, sprickelfreie Drucke.

Beispiel 5

Ersetzt man in den Beispielen 1-4 das Natriumdiamylsulfosuccinat durch gleiche Mengen Natriumdihexylsulfosuccinat oder ein Fettsäuresulfonat mit 12 bis 16 C-Atomen, so erhält man ebenfalls egale, sprickelfreie Drucke.

Beispiel 6

Ersetzt man in den Beispielen 1-5 das nichtionogene Polykondensationsprodukt durch gleiche Mengen Cetyl/Stearylalkohol verethert mit 25 Mol Ethylenoxid so erhält man ebenfalls egale, sprickelfreie Drucke.

Beispiel 7 (Vergleichsbeispiel)

Ersetzt man in den Beispielen 1-4 das Natriumdiamylsulfosuccinat durch gleiche Mengen Ligninsulfonat, so erhält man bei Verwendung der beschriebenen organischen Drucktinte Drucke, welche deutliche Sprickel aufweisen.

Beispiel 8 (Vergleichsbeispiel)

Ersetzt man in den Beispielen 1-4 das Natriumdiamylsulfosuccinat durch gleiche Mengen Wasser, werden die Dispersionen beim Mahlen, insbesondere in einer Dyno-Mühle sehr hochviskos und lassen sich nur schlecht mahlen. Bei Verwendung der beschriebenen organischen Drucktinte erhält man Drucke, welche deutliche Sprickel aufweisen. Ausserdem bilden sich in der organischen Drucktinte Agglomerate.

Beispiel 9

Ersetzt man in den Beispielen 1-4 das Natriumdiamylsulfosuccinat durch gleiche Mengen Fettaminoxalkylierungsprodukt der Formel

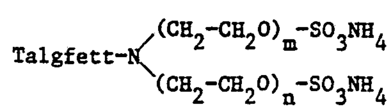

worin m + n gleich 8 ist, so erhält man ebenfalls egale, stippenfreie Drucke.

Beispiel 10

440 Teile des Dispersionsfarbstoffes der Formel

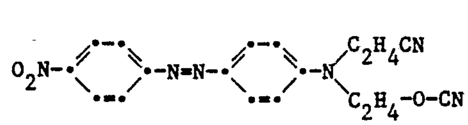

in Form des von Elektrolyten weitgehend gereinigten, bei 100° getrockneten und in einer Stiftmühle trockengemahlenen Rohfarbstoffes werden in einem Dispergiermedium, bestehend aus

278 Teilen Wasser,
200 Teilen 1,2-Propylenglykol,
10 Teilen Formalin,
30 Teilen eines nichtionogenen Polykondensationsproduktes, bestehend aus 20 % Propylenoxid

und 80 % Ethylenoxid, mit einem Molekulargewicht von ca. 16,500
20 Teilen Talgfettamin-oxalkylierungsprodukt der Formel

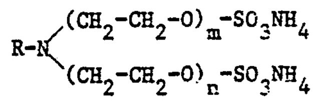

R = Kohlenwasserstoffrest des Talgfettamins
m + n= 8

20 Teilen Ligninsulfonsäure-NaSalz sowie
2 Teilen Antischaummittel (1 : 10 Verdünnung mit Wasser),

angerührt.

Die Dispersion wird in einer Rührwerksmühle mittels Zirkonoxid Mahlkörpern solange vermahlen, bis die Primärteilchengrösse des Farbstoffes unter 2 μm liegt. Das Mahlgut wird von den Mahlkörpern abgetrennt und entlüftet. Man erhält ein Farbstoffpräparat, welches dünnflüssig ist, sich gut filtrieren lässt und seine physikalisches Stabilität, insbesondere seinen Dispersionsgrad, auch nach mehrwöchiger Lagerung bei 60° oder mehrmonatiger Aufbewahrung bei wechselnden Raumtemperaturen nur unwesentlich verändert.

Das gleiche Ergebnis wird erzielt, wenn die Dispersion in einer Perl-, Sand- oder Dynomühle gemahlen wird.

## Beispiel 11

440 Teile des Dispersionsfarbstoffes der Formel

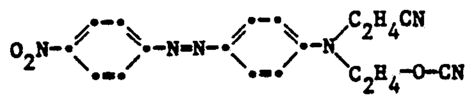

in Form des von Elektrolyten weitgehend gereinigten, bei 100° getrockneten und in einer Stiftmühle trocken gemahlenen Rohfarbstoffes werden in einem Dispergiermedium, bestehend aus

278 Teilen Wasser,
200 Teilen 1,2-Propylenglykol,
10 Teilen Formalin,
30 Teilen eines nichtionogenen Polykondensationsproduktes, bestehend aus 20 % Propylenoxid und 80 % Ethylenoxid, mit einem Molekulargewicht von ca. 16,500,
20 Teilen Ligninsulfonsäure-NaSalz,
20 Teilen Na-diamylsulfosuccinat sowie
2 Teilen Antischaummittel (1 : 10 Verdünnung mit Wasser),

angerührt. Die Mischung wird dann entlüftet.

Die entlüftete Dispersion wird in einer Rührwerksmühle mittels Zirkonoxid-Mahlkörpern solange vermahlen, bis die Primärteilchengrösse des Farbstoffes weniger als 2 μm beträgt. Das Mahlgut wird von den Mahlkörpern abgetrennt. Man erhält ein Farbstoffpräparat, welches dünnflüssig ist, sich gut filtrieren lässt und seine physikalische Stabilität, insbesondere seinen Dispersionsgrad, auch nach mehrwöchiger Lagerung bei 60° oder mehrmonatiger Aufbewahrung bei wechselnden Raumtemperaturen nur unwesentlich verändert.

## Beispiel 12a

Druckvorschrift für den Vollton-Druck

In 985 Teile einer mit Natronlauge auf pH = 6,8-7,1 gestellten 3,5 %-igen Lösung einer hoch- sowie niedermolekularen Polyacrylsäure (im Verhältnis 2,5 : 1) in destilliertem Wasser werden 15 Teile des gemäss Beispiel 10 oder 11 erhaltenen Farbstoffpräparates eingerührt und gut homogenisiert. Die Viskosität der erwähnten neutralen Lösung der Polyacrylsäure liegt zwischen 22,000 bis 25,000 mP.s (Brookfield-Viskosimeter RVT, Spindel 4, 60 Min. bei 20°).

Mit dieser Druckpaste wird auf einer Rotationstiefdruckmaschine (Rouleaudruck) ein Polyestergewebe bedruckt. Anschliessend wird bei 100-140° getrocknet und das bedruckte Gewebe im Hochtemperaturdampf während 8 Minuten bei 180° fixiert.

Anstelle diser sog. HTS-Fixierung kann ebenso gut eine Trokkenfixierung (Thermo solierung) während einer Minute bei 200-210° durchgeführt werden.

Nach dem Fixierungsvorgang ist die Ware gebrauchsfertig. Es resultieren Polyesterdrucke von weichem Griff, von hoher Brillanz und optimaler Farbstärke. Der Fixiergrad des orange Farbstoffes betragt über 99 %. Deshalb ist ein Nachwaschen des bedruckten und fixierten Gewebes nicht erforderlich, weil der erzielte Griff sowie die Echtheiten den in der Praxis gestellten Anforderungen vollkommen genügen.

Beispiel 12b

Druckvorschrift für den Hellton-Druck

Für den Hellton-Druck wird ein Teil der obengenannten Druckpaste mit 29 Teilen der obengenannten mit Natronlauge neutralisierten Polyacrylsäure gemischt. Die so erhaltene Druckpaste wird in einem Druckverfahren gemäss Beispiel 12a eingesetzt.

Beispiel 13 (Vergleichsbeispiel)

Ersetzt man in den Beispielen 10 und 11 das Fettamin-oxalkylierungsprodukt oder das Natrium-diamylsulfosuccinat durch die gleiche Menge Ligninsulfonat, so erhält man bei Verwendung der beschriebenen wässrigen Druckpaste in Fall heller Töne Drucke, welche deutliche Sprickel aufweisen.

Beispiel 14

500 Teile des getrockneten gelben Küpenfarbstoffes der Formel

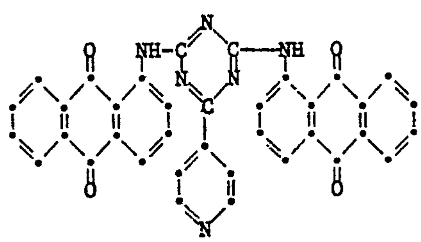

werden in eine Lösung, enthaltend

300 Teile Wasser,
150 Teile Glycerin,
30 Teile eines nichtionogenen Polykondensationsproduktes, bestehend aus 20 % Propylenoxid und 80 % Ethylenoxid, mit einem Molekulargewicht von ca. 16,500 und
20 Teile Natrium-diamylsulfosuccinat

eingerührt und der flüssige slurry in einer Rührwerksmühle mit 1 mm Glasperlen auf eine Primärteilchengrösse, die in der Hauptmenge wesentlich unter 2 µm liegt, und nur vereinzelte Partikeln über 5 µm aufweist, herunter gemahlen.

Die von den Mahlkörpern abgeschiedene, entlüftete Dispersion ist flüssig. Auch nach einer 14-tägigen Aufbewahrlung bei 60° bleiben die Viskosität und die Filterbarkeit unverändert.

Rührt man dieses Präparat auf übliche Weise in wässrige Textildruckverdickungen und bedruckt anschliessend Cellulose-Fasern mit der erhaltenen Druckpaste, so erhält man einen stippenfreien Druck.

Ersetzt man im obigen Beispiel das Natrium-diamylsulfosuccinat durch gleiche Mengen Natriumdihexylsulfosuccinat, ein Fettsäuresulfonat mit 12-16 C-Atomen oder das im Beispiel 9 aufgeführte Fettaminoxalkylierungsprodukt, so erhält man Präparate mit ähnlichen Eigenschaften.

**Ansprüche**

1. Leicht dispergierbare Farbstoffpräparate, enthaltend Wasser, einen oder mehrere in Wasser unlösliche oder schwerlösliche Farbstoffe, ein anionisches und ein nichtionisches Dispergiermittel sowie gegebenenfalls weitere Zusätze, dardurch gekennzeichnet, dass sie als anionisches Dispergiermittel

a) Dialkylsulfosuccinate, deren Alkylgruppen je 3-7 Kohlenstoffatome aufweisen, oder

b) sulfatierte oder sulfonierte Fettsäuren oder Fettsäureester von Fettsäuren mit 10 bis 22 Kohlenstoffatomen oder

c) Fettamin-oxalkylierungsprodukte der Formel

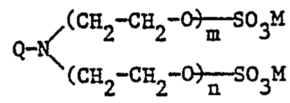

worin

Q einen aliphatischen Kohlenwasserstoffrest mit 12-22 C-Atomen,

M Wasserstoff, ein Alkalimetall-, Ammonium- oder Aminsalzkation

und

m und n ganze Zahlen bedeuten, wobei dei Summe von m + n mindestens 2 und höchstens 50 beträgt und als weitere Zusätze keine hydrotropen Mittel enthalten.

2. Farbstoffpräparate gemäss Anspruch 1, dadurch gekennzeichnet, dass sie das anionische Dispergiermittel in einer Menge von 0,5 bis 5 Gew.%, vorzugsweise 1-3 Gew.%, bezogen auf das Gesamtgewicht des Präparates, enthalten.

3. Farbstoffpräparate gemäss Ansprüchen 1 und 2, dadurchgekennzeichnet, dass sie als anionisches Dispergiermittel

a) Dialkylsulfosuccinate, deren Alkylgruppen je 4-6 Kohlenstoffatome aufweisen, oder

b) sulfatierte oder sulfonierte Fettsäuren oder Fettsäureester von Fettsäuren mit 12 bis 18 Kohlenstoffatomen oder

c) Fettamin-oxalkylierungsprodukte der Formel

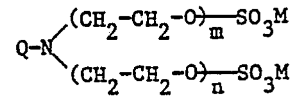

worin

Q einen aliphatischen Kohlenwasserstoffrest mit 12-22, vorzugsweise 14-22 C-Atomen,

M Wasserstoff, ein Alkalimetall-, Ammonium- oder Aminsalzkation

und

m und n ganze Zahlen bedeuten, wobei die Summe von m + n mindestens 2 und höchstens 50, vorzugsweise mindestens 2 und höchstens 30 und insbesondere mindestens 4 und höchstens 12 beträgt, enthalten.

4. Farbstoffpräparate gemäss Anspruch 3, dadurch gekennzeichnet, dass sie als anionisches Dispergiermittel Di-hexylsulfosuccinat oder Di-amylsulfosuccinat enthalten.

5. Farbstoffpräparate gemäss Anspruch 1, dadurch gekennzeichnet, dass sie das nichtionische Dispergiermittel in einer Menge von 0,5-4 Gew.%, vorzugsweise 1-3 Gew.%, bezogen auf das Gesamtgewicht des Präparates, enthalten.

6. Farbstoffpräparate gemäss Ansprüchen 1-5, dadurch gekennzeichnet, dass sie als nichtionisches Dispergiermittel Fettalkoholpolyglykolether mit 20-100 Mol Ethylenoxid oder Ethylenoxid-Kondensationsprodukte, wobei einzelne Ethylenoxideinheiten durch Propylenoxid ersetzt sind, enthalten.

7. Farbstoffpräparate gemäss Anspruch 6, dadurch gekennzeichnet, dass sie Cetyl-Stearylalkohol verethert mit 20-30 Mol Ethylenoxid oder ein Copolymerisat von Ethylenoxid und Propylenoxid der Formel

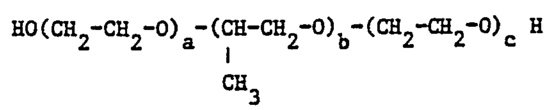

worin die Summe von a und c eine Zahl zwischen 200 und 400 und b eine Zahl zwischen 30 und 80 bedeutet, enthaltne.

8. Farbstoffpräparate gemäss Anspruch 1, enthaltend mindestens 20 Gew.% Wasser, 25-60, insbesondere 35-50 Gew.% eines fein verteilten Dispersionsfarbstoffes, 1-3 Gew.% eines anionischen Dispergiermittels gemäss Anspruch 1, 1-3 Gew.% eines nichtionischen Dispergiermittels sowie gegebenenfalls weitere Zusätze.

9. Farbstoffpräparate gemäss Ansprüchen 1-8, dadurch gekennzeichnet, dass sie als weitere Zusätze Feuchthaltemittel, Antifrostmittel, Antimicrobica, Fungicide, Antischaummittel oder viskositätsverbessernde Mittel enthalten.

10. Verfahren zur Herstellung der wässrigen Farbstoffpräparate gemäss den Ansprüchen 1 bis 9, dadurch gekennzeichnet, dass man den definitionsgemässen Farbstoff in Wasser unter Zusatz von mindestens einem der genannten anionaktiven Dispergiermittel oder eines nichtionogene Dispergiermittels vermahlt und gegebenenfalls die restlichen Komponenten vor, während oder nach dem Mahlprozess zugibt, so dass ein Präparate entsteht, dessen Teilchengrösse kleiner als 10 µm, insbesondere kleiner als 2 µm ist.

11. Verwendung der wässrigen Farbstoffpräparate gemäss den Ansprüchen 1 bis 9 zur Bereitung von Drucktinten auf wässriger, organischer oder wässrig-organischer Basis oder auf Basis einer Wasser-in-Oel Emulsion.

12. Verwendung der wässrigen Farbstoffpräparate gemäss Ansprüchen 1-9 zur Bereitung von organischen Drucktinten, bestehend aus 80 % eines Gemisches aus n-Propanol und iso-Propanol, 10 % Wasser und 10 % Celluloseacetopropionat.

13. Die gemäss Ansprüchen 11 und 12 erhaltenen Drucktinten.

14. Verwendung der gemäss Ansprüchen 11 und 12 erhaltenen Drucktinten zum Bedrucken von Trägermaterialien, insbesondere Papier, unter Anwendung von im Transferdruck geeigneten Farbstoffen.

## Claims

1. A readily dispersible dye preparation containing water, one or more dyes insoluble or difficultly soluble in water, an anionic and a nonionic dispersing agent and optionally further additives, which preparation contains as anionic dispersing agent

a) a dialkylsulfosuccinate, the alkyl groups of which each contain 3-7 carbon atoms, or

b) a sulfated or sulfonated fatty acid or fatty acid ester a fatty acid having in each case 10 to 22 carbon atoms, or

c) a fatty amine-oxalkylation product of the formula

$$Q{-}N\begin{cases}(CH_2{-}CH_2{-}O)_m{-}SO_3M\\(CH_2{-}CH_2{-}O)_n{-}SO_3M\end{cases}$$

wherein

Q is an aliphatic hydrocarbon radical having 12-22 carbon atoms,

M is hydrogen, an alkali metal cation, ammonium cation or amine salt cation,

and

m and n are integers, the sum of m + n being at least 2 and at most 50, and no hydrotropic agents as further additives.

2. A dye preparation according to Claim 1, which contains the anionic dispersing agent in an amount of 0.5 to 5 per cent by weight, preferably 1 to 3 per cent by weight, relative to the total weight of the preparation.

3. A dye preparation according to Claims 1 and 2, which contains as anionic dispersing agent

a) a dialkylsulfosuccinate, the alkyl groups of which each contain 4-6 carbon atoms, or

b) a sulfated or sulfonated fatty acid or fatty acid ester of a fatty acid having in each case 12 to 18 carbon atoms, or

c) a fatty amine-oxalkylation product of the formula

$$Q{-}N\begin{cases}(CH_2{-}CH_2{-}O)_m{-}SO_3M\\(CH_2{-}CH_2{-}O)_n{-}SO_3M\end{cases}$$

wherein

Q is an aliphatic hydrocarbon radical having 12-22, preferably 14-22, carbon atoms,

M is hydrogen, an alkali metal cation, ammonium cation or amine salt cation,

and

m and n are integers, the sum of m + n being at least 2 and at most 50, preferably at least 2 and at most 30, and particularly at least 4 and at most 12.

4. A dye preparation according to Claim 3, which contains di-hexylsulfosuccinate or di-amylsulfosuccinate as the anionic dispersing agent.

5. A dye preparation according to Claim 1, which contains the nonionic dispersing agent in an amount of 0.5-4 per cent by weight, preferably 1 to 3 per cent by weight, relative to the total weight of the preparation.

6. A dye preparation according to Claims 1-5, in which the nonionic dispersing agent contained is fatty alcohol polyglycol ether having 20-100 mols of ethylene oxide or an ethylene oxide condensation product, wherein individual ethylene oxide units are replaced by propylene oxide.

7. A dye preparation according to Claim 6, which contains cetyl-stearyl alcohol etherified with 20-30 mols of ethylene oxide or a copolymer of ethylene oxide and propylene oxide of the formula

$$HO(CH_2{-}CH_2{-}O)_a{-}(\underset{\displaystyle CH_3}{\underset{|}{CH}}{-}CH_2{-}O)_b{-}(CH_2{-}CH_2{-}O)_c\ H$$

wherein the sum of a and c is a number between 200 and 400, and b is a number between 30 and 80.

8. A dye preparation according to Claim 1 containing at least 20 per cent by weight of water, 25-60 per cent by weight, especially 35-50 per cent by weight, of a finely dispersed disperse dye, 1-3 per cent by weight of an anionic dispersing agent according to Claim 1 and 1-3 per cent by weight of a nonionic dispersing agent, as well as optionally further additives.

9. A dye preparation according to Claims 1-8, in which further additives contained are moisture-retaining agents, antifreezing agents, antimicrobics, fungicides, antifoam agents of agents improving viscosity.

10. A process for producing an aqueous dye preparation according to Claims 1 to 9, which process comprises grinding the defined dye in water with the addition of at least one of the stated anion-active dispersing agents or of a nonionic dispersing agent, and optionally adding the remaining constituents, before, during or after the grinding process, so that a preparation is formed of which the particle size is smaller than 10 µm, particularly smaller that 2 µm.

11. Use of an aqueous dye preparation according to Claims 1-9 for producing printing inks having an aqueous, organic or aqueous-organic base, or a water-in-oil emulsion base.

12. Use of an aqueous dye preparation according to Claims 1-9 for producing an organic printing ink consisting of 80 % of a mixture of n-propanol and iso-propanol, 10 % of water and 10 % of cellulose acetopropionate.

13. The printing inks produced according to Claims 11 and 12.

14. Use of the printing inks obtained according to Claims 11 and 12 for printing carrier materials, especially paper, with application of dyes suitable for transfer printing.

**Revendications**

1. Préparations tinctoriales pouvant être aisément dispersées, contenant de l'eau, un ou plusieurs colorants insolubles ou difficilement solubles dans l'eau, un dispersant anionique et un dispersant non ionique, et éventuellement d'autre additifs, caractérisées par le fait qu'elles contiennent comme dispersant anionique

a) Des dialkylsulfosuccinates dont les groupes alkyle présentent chacun 3 à 7 atomes de carbone, ou

b) Des acides gras ou des esters d'acides gras à partir des acides gras ayant 10 à 22 atomes de carbone, sulfatés ou sulfonés, ou

c) Des produits d'oxyalkylation d'amines grasses de formule

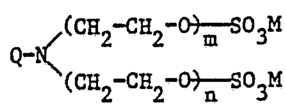

dans laquelle

Q est un reste hydrocarboné aliphatique ayant 12 à 22 atomes de carbone,

M est de l'hydrogène, un cation de métal alcalin, ammonium ou de sel d'amine,

et

m et n sont des nombres entiers, la somme de m et n étant d'au moins 2 et au plus de 50 et comme autres additifs, ne contiennent aucun agent hydrotrope.

2. Préparations tinctoriales selon la revendication 1, caractérisées par le fait qu'elles contiennent le dispersant anionique en une quantité de 0,5 à 5 % en poids, de préférence de 1 à 3 % en poids par rapport au poids total de la préparation.

3. Préparations tinctoriales selon les revendications 1 et 2, caractérisées par le fait qu'elles contiennent comme dispersant anionique

a) Des dialkylsulfosuccinates dont les groupes alkyle ont chacun 4 à 6 atomes de carbone, ou

b) Des acides gras ou des esters d'acides gras à partir des acides gras ayant 12 à 18 atomes de carbone, sulfatés ou sulfonés, ou bien,

c) Des produits d'oxyalkylation d'amines grasses de formule

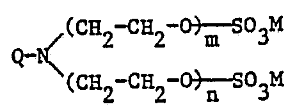

dans laquelle

Q est un reste hydrocarboné aliphatique ayant 12 à 22, de préférence 14 à 22 atomes de carbone,

M est l'hydrogène, un cation de métal alcalin, ammonium ou de sel d'amine,

et

m et n sont des nombres entiers, la somme de m + n étant au moins égale à 2 et au plus à 50, de préférence au moins à 2 et au plus à 30, et en particulier au moins à 4 et au plus à 12.

4. Préparations tinctoriales selon la revendication 3, caractérisées par le fait qu'elles contiennent comme dispersant anionique du di-hexylsulfosuccinate ou du di-amylsulfosuccinate.

5. Préparations tinctoriales selon la revendication 1, caractérisées par le fait qu'elles contiennent le dispersant non ionique à raison de 0,5 à 4 % en poids, de préférence 1 à 3 % en poids par rapport au poids total de la préparation.

6. Préparations tinctoriales selon les revendications 1 à 5, caractérisées par le fait qu'elles contiennent comme dispersant non ionique des éthers d'alcools gras et de polyglycols avec 20 à 100 moles d'oxyde d'éthylène ou des produits de condensation d'oxyde d'éthylène, divers motifs d'oxyde d'éthylène étant remplacés par de l'oxyde de propylène.

7. Préparations tinctoriales selon la revendication 6, caractérisées par le fait qu'elles contiennent de l'alcool cétylstéarylique hétérifié avec 20 à 30 moles d'oxyde d'éthylène ou bien un copolymère d'oxyde d'éthylène et d'oxyde de propylène ayant la formule

$$HO(CH_2-CH_2-O)_a-(\underset{\underset{\displaystyle CH_3}{|}}{CH}-CH_2-O)_b-(CH_2-CH_2-O)_c\ H$$

dans laquelle la somme de a et c est un nombre compris entre 200 et 400, et b est un nombre compris entre 30 et 80.

8. Préparations tinctoriales selon la revendication 1, contenant au moins 20 % en poids d'eau, 25 à 60, en particulier 35 à 50 % en poids d'un colorant dispersé finement divisé, 1 à 3 % en poids d'un dispersant anionique selon la revendication 1, 1 à 3 % en poids d'un dispersant non ionique ainsi qu'éventuellement d'autres additifs.

9. Préparations tinctoriales selon les revendications 1 à 8, caractérisées par le fait qu'elles contiennent comme autres additifs, des agents maintenant l'humidité, des agents anti-gel, des produits microbicides, des produits fongicides, des anti-mousses ou des agents améliorant la viscosité.

10. Procédé pour l'élaboration de préparations tinctoriales aqueuses selon les revendications 1 à 9, caractérisé par le fait qu'on broie le colorant conforme à la définition dans l'eau en ajoutant au moins un des dispersants anioniques mentionnés ou un dispersant non ionique, et qu'on ajoute éventuellement les constituants restants avant, pendant ou après le processus de broyage, afin de former une préparation dont la grosseur des particules est inférieure à 10 µm, en particulier inférieure à 2 µm.

11. Utilisation des préparations tinctoriales aqueuses selon les revendications 1 à 9, pour la préparation des couleurs d'impressions de base aqueuse, organique ou hydro-organique, ou bien à base d'une émulsion eau dans huile.

12. Utilisation des préparations tinctoriales aqueuses selon les revendications 1 à 9, pour préparer des couleurs d'impression organiques constituées par 80 % d'un mélange de n-propanol et d'isopropanol, 10 % d'eau et 10 % d'acétopropionate de cellulose.

13. Les couleurs d'impression obtenues selon les revendications 11 et 12.

14. Utilisation des couleurs d'impression obtenues selon les revendications 11 et 12 pour imprimer des matières-supports, en particulier du papier, en utilisant des colorants appropriés pour l'impression par transfert.